# EUROPEAN PATENT SPECIFICATION

(11) **EP 4 278 876 B1**
(45) Date of publication and mention of the grant of the patent: **26.03.2025**
(21) Application number: 23160059.4
(22) Date of filing: 03.03.2023
(51) Int. Cl.: A01B 69/04, A01B 79/00, G05D 1/00

(54) **METHOD AND SYSTEM FOR PRECISE PLANTING BASED ON PLANNED PATHS**
VERFAHREN UND SYSTEM ZUM PRÄZISEN PFLANZEN AUF BASIS VON GEPLANTEN FAHRWEGEN
PROCÉDÉ ET SYSTÈME DE PLANTATION PRÉCISE SUR LA BASE DE CHEMINS PLANIFIÉS

(30) Priority: 20.05.2022 US 202217664240
(43) Date of publication of application: 22.11.2023
(73) Proprietor: Deere & Company, Moline, IL 61265 (US)
(72) Inventor: SUBRAMANIAN, Shriraam Prabu, Pune (IN); SCHLEICHER, Tyler D., Urbandale (US)
(74) Representative: Reddie & Grose LLP

(56) References cited:
- AU-B2- 2005 325 707
- US-A1- 2005 075 784
- US-B2- 7 505 848

## Description

### Field

This disclosure relates to a method and system for precise planting based on planned paths.

### Background

In some background art, a planter can control selectively the row units of an implement, such as a planter. Further, an automatic guidance system may be used to guide a vehicle, or its implement to track a path plan. However, previous planting paths of an implement during the same season may interfere with subsequent planting paths of the implement during the same season, which can reduce crop yields and waste crop inputs, like seeds. With some agricultural practices, a buffer zone or headlands region around the field could be left unplanted to reduce such interferences albeit with a potential yield penalty for the unplanted buffer zone. Thus, there is a need for a method and system for precise planting based on planned paths (e.g., to efficiently use crop inputs for maximum potential yield). AU 2005325707 relates to a path planner and method for planting path plans having spiral components for improving planting energy efficiency. US 7,505,848 describes a path planner and method for planning contour paths around obstacles for improving planting energy efficiency.

### Summary

In accordance with one embodiment, a method and system facilitates precise planting based on planned paths. A path planning module or electronic data processor is configured to establish a path plan for an implement (e.g., planter) to cover a first area of the field at least once with a sequence of path segments in which some path segments are generally parallel to each other and spaced apart. A path interference estimator or the electronic data processor is configured to estimate potential interference between two or more path segments with respect to a first path segment and a second path segment, wherein the first path segment is associated with an earlier scheduled portion of the sequence and the second path segment is associated with a later scheduled portion of the sequence. An exclusion zone module or the electronic data processor is configured to determine an exclusion zone for the implement (e.g., row units of a planter) to prohibit planting of one or more rows of seeds or seedlings within the exclusion zone based on the estimated potential interference. Responsive to user input via the user interface, the electronic data processor is configured to activate or execute the path plan and determined exclusion zone in accordance with the established path plan and determined exclusion zone.

### Brief Description of the Drawings

FIG. 1A is a block diagram of one embodiment of a system for precise planting based on planned paths.
FIG. 1B is a block diagram of another embodiment of a system for precise planting based on planned paths.
FIG. 2 is a perspective view of a off-road vehicle that is towing a planting implement of multiple row units in accordance with planned paths.
FIG. 3 is a side view of one embodiment of a row unit of the planting implement of FIG. 2.
FIG. 4 is a side view of another embodiment of a row unit of the planting implement of FIG. 2.
FIG. 5 illustrates a typical path plan where there tends to be overlap of rows in a headland region.
FIG. 6 illustrates a possible path plan where path segments overlap with each other during turning of an off-road vehicle and a towed planting implement in accordance with the disclosure.
FIG. 7 illustrates a possible path plan and associated exclusion zone where path segments overlap with each other during turning of an off-road vehicle and a towed implement.
FIG. 8 illustrates another possible path plan where path segments overlap with each other.
FIG. 9 is a flow chart of one embodiment of a method for precise planting based on planned paths.

### Detailed Description

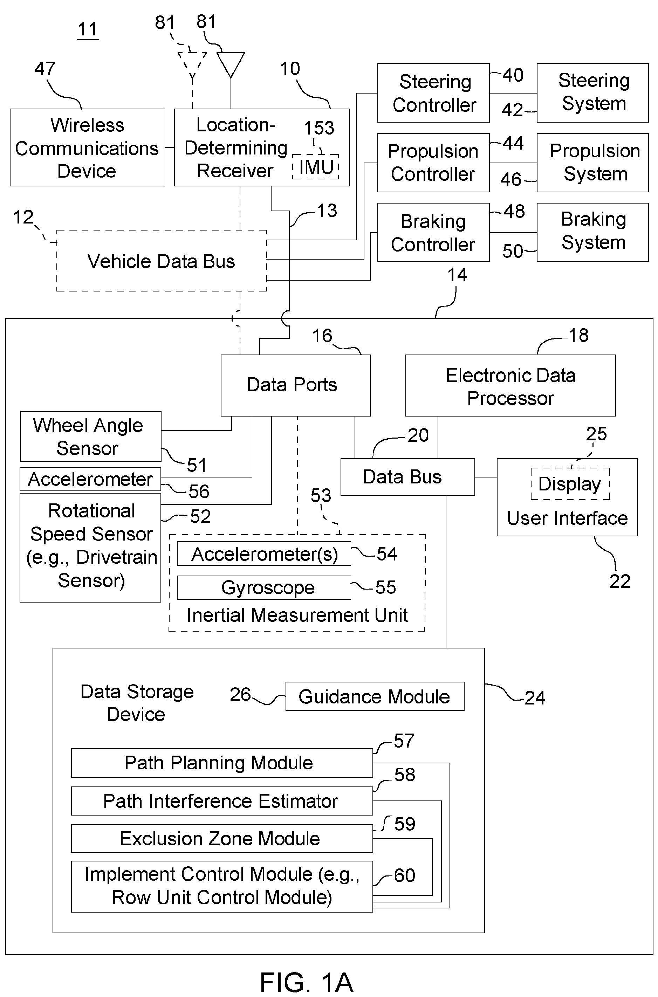

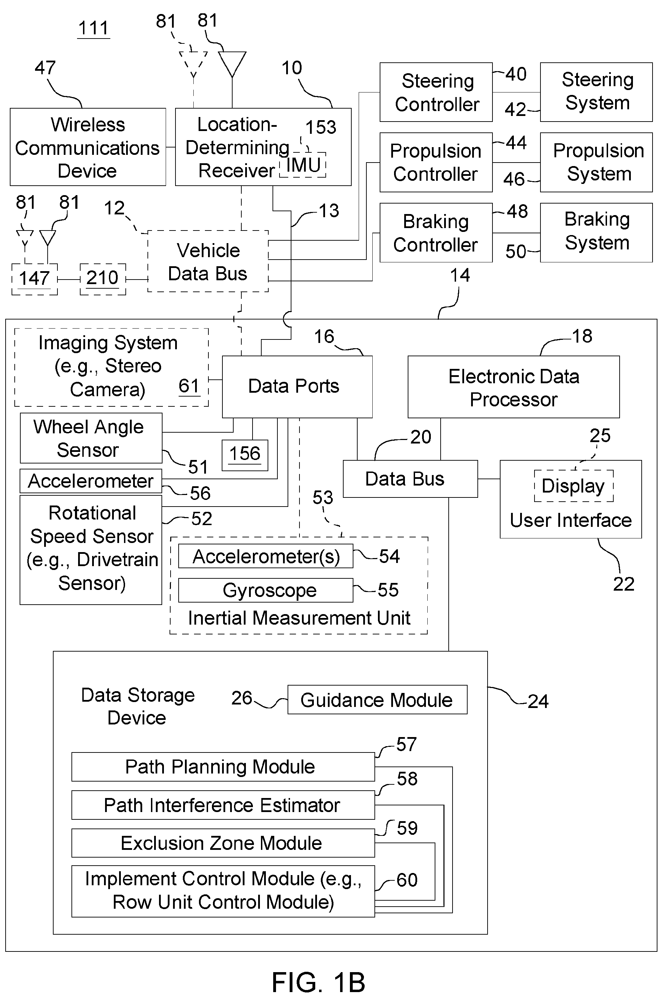

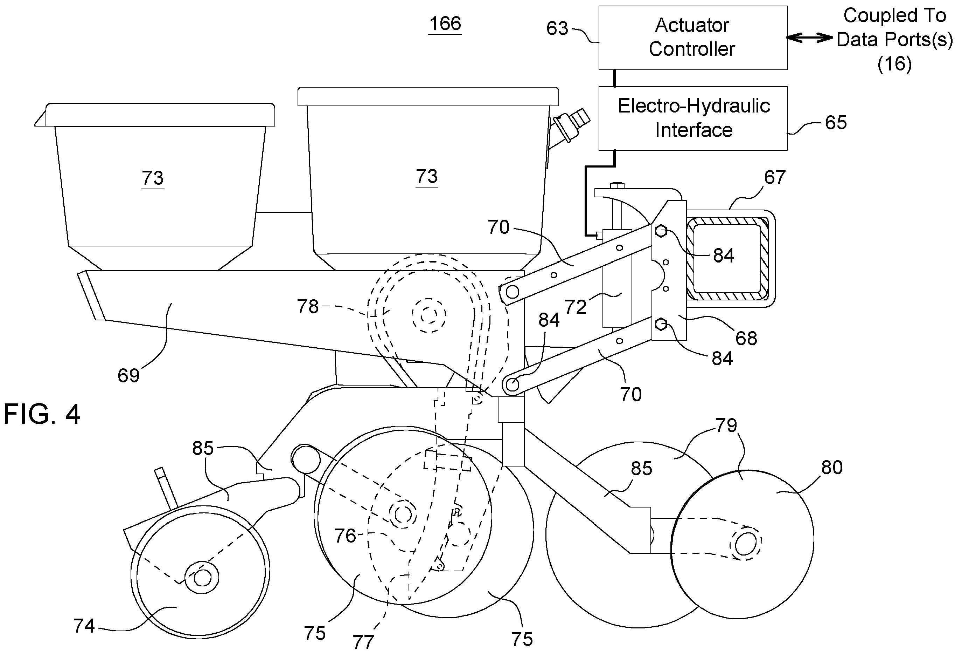

FIG. 1A is one embodiment of a block diagram of a system 11 for determining a path plan for an off-road vehicle (e.g., 82 in FIG. 4) to control an implement (e.g., 83 in FIG. 4). In FIG. 1A, alone or together with FIG. 1B, the system 11 is capable of detecting motion data and attitude data by one or more sensors, such as one or more location-determining receivers (10, 210), one or more accelerometers (54, 56), gyroscope 55, or an internal measurement unit (IMU) (53, 153) that use accelerometers or gyroscopes. In one example, the system 11 may send a path plan or data message to an operator or end user of the detection system 11 via a wireless communications channel and via a user interface 22 that is incorporated into a vehicle, such as a display 25. In an alternate embodiment, the user interface 22 and display 25 may be located remotely from the vehicle via a wireless link to support remote control or tele-operation of the vehicle by the operator.

In one embodiment, the system 11 comprises an electronic data processing system 14 that is coupled to a location-determining receiver 10 directly, or via a vehicle data bus 12. The optional connection via vehicle data bus 12 is shown in dashed lines because it is optional and the connection between the electronic data processing system 14 and location-determining receiver 10 may be direct, as indicated by transmission line 13, which can be used separately or cumulatively with the interconnection via the vehicle data bus 12. The location-determining receiver 10 may have an antenna 81 mounted on the vehicle, on the implement or both.

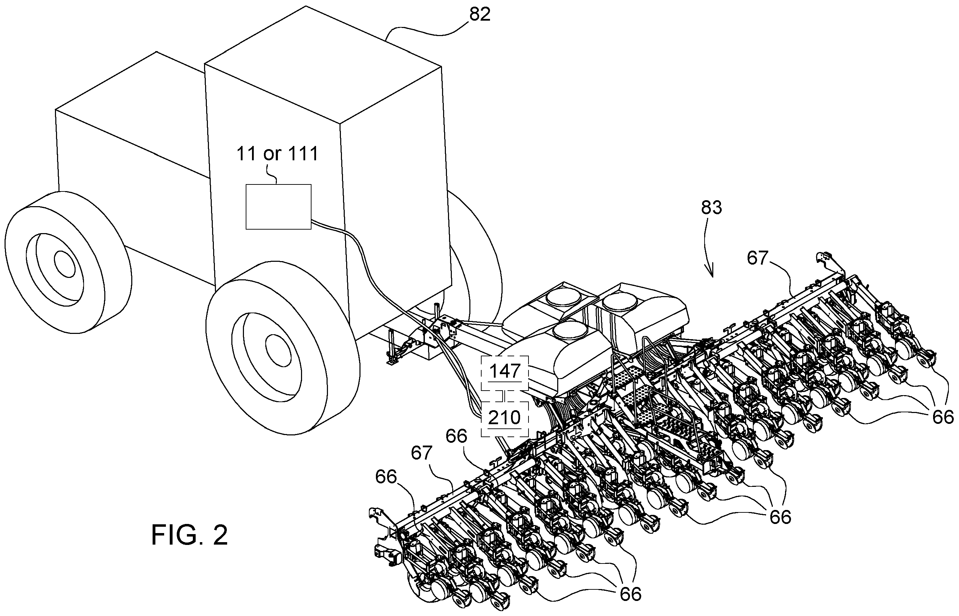

In an alternate embodiment, a first location-determining receiver 10 and its antenna 81 are on or in the vehicle (e.g., 82 in FIG. 2); a second location-determining receiver 210 (in FIG. 1B) and its antenna are on or in the implement (e.g., 83 in FIG. 2), where both the first location-determining receiver 10 and the second-location determining receiver 210 may comprise satellite navigation receivers (with or without differential correction data) or other location-determining receivers.

In one embodiment, the electronic data processing system 14 comprises an electronic data processor 18, one or more data ports 16, a user interface 22 and a data storage device 24 coupled to a data bus 20. The electronic data processor 18 may comprise a processor, a microcontroller, a digital signal processor, an application specific integrated circuit (ASIC), a programmable logic array, a programmable logic device, a logic circuit, an arithmetic logic unit, a Boolean logic device, or another data processing device. The data storage device 24 may comprise one or more of the following: electronic memory, nonvolatile electronic memory, an optical data storage device, a magnetic data storage device, or other device for storing digital or analog data.

In one embodiment, the data storage device 24 may store, retrieve, read and write one or more of the following items: a guidance module 26, a path planning module 57, a path interference estimator 58, an exclusion zone module 59, and an implement control module 60 (e.g., row unit control module). A module means software, electronics, or both, where software can include software instructions, executable files, data structures, and libraries, among other things.

As used in this document, configured to, adapted to and arranged to may refer any of the following items: (1) software or program instructions that are stored in the data storage device 24 or other data storage and executable by the data processor 18 to perform certain functions, software, (2) software or embedded firmware that are stored in the location-determining receiver (10, 210) or its memory or data storage to perform certain functions, or (3) electronic, electrical circuits or modules that can perform substantially equivalent functions to the software, embedded firmware or program instructions.

Any data port 16 may comprise a data transceiver, buffer memory, or both. The user interface 22 may comprise one or more of the following: a display 25 (e.g., display), a touch screen display, a keypad, a keyboard, a control panel, a pointing device (e.g., electronic mouse), or another device for entry or output of data from the data processing system 14.

In one embodiment, a wheel angle sensor 51, one or more accelerometers (54, 56), a rotational speed sensor 52, an optional IMU (53, 153) and a data bus 20 are coupled to the data ports 16. The electronic data processing system 14 communicates to data ports 16 directly, or indirectly via the data bus 20. Further, the data ports 16 support the communication of data messages to, from or between, or among any of the following: the electronic data processor 18, the data storage device 24, any modules, data, files, libraries, or software within the data storage device 24, the location-determining receiver (10, 210) the wheel angle sensor 51, one or more accelerometers (54, 56), a rotational speed sensor 52, an optional IMU and a data bus 20.

In one embodiment, the optional IMU 53 is a separate device, whereas in other embodiments, the IMU 153 is integral with the location-determining receiver 10. The optional separate IMU 53 comprises one or more accelerometers 54 and a gyroscope 55, where the accelerometers 54 may be arranged on orthogonal axes with respect to each other to facilitate detection of vehicle attitude, such as roll angle, pitch angle and yaw angle of a vehicle.

In FIG. 1A, the steering controller 40, the propulsion controller 44 and the braking controller 48 are coupled to the vehicle data bus 12. For example, the data processing system 14 can communicate with the steering controller 40, the propulsion controller 44 and the braking controller 48, and vice versa. In one embodiment, the steering controller 40 is coupled to the steering system 42, such as an electrical motor or electrohydraulic device that is mechanically coupled to a steering mechanism (e.g., rack-and-pinion or Ackerman steering system) for controlling the angular orientation of one or more wheels about a generally vertical axis. In one embodiment, the propulsion controller 44 may comprise an electronic engine controller for controlling a throttle or fuel metering system of a propulsion system 46, such as internal combustion engine. In another embodiment, a propulsion controller 44 may comprise an inverter or motor controller for controlling a propulsion system 46, such as a drive motor of a hybrid or electric vehicle. In one embodiment, the braking controller 48 interfaces with a braking system 50, such as hydraulic braking system, an electrohydraulic braking system, a cable braking system, or an electromechanical braking system to stop or decelerate the vehicle.

In one configuration, the guidance module 26 controls the vehicle to track or follow a path plan, a planned path, such as sequence of one or more interconnected path segments, where one or more path segments may comprise any of the following: generally straight path segments, curved path segments, arced path segments, or otherwise. Within a sequence of a path plan or planned path, a guidance module 26 or path planning module 57 is configured to execute or process a previous or prior path segment before execution or processing of a present, subsequent or later path segment. Further, a path plan may comprise a generally linear path plan, a curved path plan, a contour path plan, a spiral path plan, a coverage area path plan, or other path plan, For example, a path plan may comprise any of the following: one or more linear path segments or rows, curved path segments or turns, such as an end turn, a key-hole end turn, a loop end turn, a row-skipping end turn. In the automated guidance mode, in certain vehicle configurations the guidance module 26 can control the steering, propulsion, and braking of the vehicle. For example, in the automated guidance mode, the guidance module 26 can communicate with one or more of the following controllers to direct and guide the vehicle: steering controller 40, propulsion controller 44 and braking controller 48.

In FIG. 1A in accordance with one embodiment, the system 11 comprises one or more location-determining receivers (10, 210) for estimating a position, motion, and attitude data of the vehicle (82 in FIG. 2), or its implement (e.g., 83 in FIG. 2), or both. As used in the disclosure, attitude refers to roll angle, pitch angle and yaw angle, or motion data associated with roll angle, pitch angle and yaw angle. As used in the disclosure, motion data comprises velocity data (e.g., speed data), acceleration data, or both. The velocity data and acceleration data may be expressed as vectors. As used in the disclosure, a yaw angle or heading can refer to: (1) an angular direction of travel of the vehicle with reference to due North or magnetic North, or (2) a yaw or yaw angle of the vehicle with reference to coordinate system, such as a Cartesian coordinate system.

In an alternate embodiment, a first location-determining receiver 10 or its antenna 81 is mounted on the vehicle for estimating a position, motion or attitude data of the vehicle (82 in FIG. 4) and a second location-determining receiver 210 is mounted on the implement (e.g., 83 in FIG. 2) for estimating a position, motion or attitude data of the implement that is coupled to the vehicle; position, motion and attitude data is available for the vehicle, its implement or both for processing by the electronic data processor 18 to execute the software instructions associated with modules, estimators, or other components within the data storage device 24.

In one embodiment, the location-determining receiver (10, 210) (e.g., satellite navigation receiver), alone or together with a wireless communications device, has a pair of antennas 81 that are spaced apart with a known orientation. Further, the location-determining receiver (10, 210) or the electronic data processor 18 can couple (e.g., selectively or switchably in rapid succession during the same epoch) either antenna 81 of the pair of antennas 81 to support estimation of the attitude of the pair of antennas when the vehicle or implement is at a fixed position or substantially the same position. For example, the pair of antennas 81 are spaced apart by a known distance on an axis with a known or fixed orientation (e.g., compound angular offset in one or more dimensions) to the longitudinal axis (in the direction of travel of the vehicle) and vertical axis of the vehicle. The location-determining receiver (10, 210) may estimate a first position (e.g., in three dimensions) of the first antenna 81 and a second position (e.g., in three dimensions) of the second antenna 81. Accordingly, the data processor or the location-determining receiver (10, 210) may estimate the precise attitude (e.g., yaw data, roll data, or both) of the vehicle, or its implement, based on the first position and the second position for the same epoch or measurement period, with or without augmentation by the correction data.

In one embodiment, a wireless communications device (47, 147) is coupled to a data port of a location-determining receiver (10, 210) or a vehicle data bus 12 to augment the received satellite signals and associated carrier phase measurements of the received satellite signals (e.g., of at least four satellites) at the location-determining receiver (10, 210). For example, the wireless communications device (47, 147) may comprise a separate receiver or transceiver (e.g., satellite, cellular, or wireless device) may receive the correction data or differential correction data via a wireless signal transmitted from a satellite or a terrestrial base station (e.g., real-time kinematic (RTK) base station). The wireless communications device (47, 147) may receive correction data from one or more of the following sources of correction data: (a) differential correction data from local base stations or local reference receivers operating in a real-time-kinematic (RTK) mode, (b) correction data associated with a precise-point-position (PPP) satellite navigation system with precise orbital correction data for satellites and satellite clocks in a PPP mode, (c) correction data applicable to a satellite navigation system, and correction data (e.g., carrier-phase offset or position vector offset) provided from a hub or central processing center in communication a network of reference satellite navigation receivers, and (d) other correction data is commercially available from local, wide-area, regional, or global correction or satellite data augmentation services.

In one embodiment, the location-determining receiver (10, 210) provides one or more of the following types of data for a vehicle, and/or its implement: yaw data (e.g., heading data), roll data, pitch data, position data, velocity data, and acceleration data (e.g., as vectors or in two or three dimensional coordinates). The location-determining receiver (10, 210) may comprise a satellite navigation receiver, a Global Navigation Satellite System (GNSS) receiver, a Global Positioning System (GPS) receiver, or another receiver for determining position data, motion data or attitude data. In one embodiment, a location-determining receiver (10, 210) provides location data, path heading data, vehicle heading data, velocity data, and acceleration data along target path or path plan to the data processing system 14 or guidance module 26.

In one embodiment, an optional separate inertial measurement unit 53 (IMU) may be separate from the location-determining receiver 10 or an optional integral IMU 153 may be integrated with the location determining receiver 10. The optional nature of the separate IMU 53 and the integral IMU 153 is indicated by dashed lines in FIG. 1A. The separate IMU 53 or the integral IMU 153 can estimate the attitude, yaw angle, yaw rate, roll, roll rate, pitch angle, pitch rate for the vehicle, or its implement, for instance. The yaw rate may refer to yaw angular velocity, yaw angular acceleration or both; the roll rate may refer to roll angular velocity, roll angular acceleration or both; the pitch rate may refer to pitch angular velocity, pitch angular acceleration or both.

In one configuration, the data processing system 14 comprises a roll sensor, pitch sensor and a yaw sensor. Any roll sensor, pitch sensor and yaw sensor may comprise an accelerometer (e.g., 54, 56), a three-axis accelerometer, a gyroscope, an IMU, or another sensor. In general, each sensor, such as roll sensor, which is based on accelerometer measurements and/or gyroscope measurements, is subject to bias in their measurements that may arise over time, unless the sensor is calibrated or recalibrated (e.g., by the carrier phase measurements of the location-determining receiver (10, 210).)

In one embodiment, the roll sensor comprises a first accelerometer 56 that is configured to measure roll angle, roll angular velocity, and/or roll angular acceleration of the vehicle. Similarly, the pitch sensor comprises a second accelerometer 156 that is configured to measure pitch angle, pitch angular velocity and/or pitch angular acceleration of the vehicle. In one configuration, the roll sensor and the pitch sensor may provide attitude data and motion data, such as roll data and pitch data, that the electronic data processor 18 can use to determine a surface roughness estimate.

In another embodiment, the accelerometers (56, 156), gyroscopes 55 or IMU (53, 153) of the data processing system 14 detect or measure one or more of the following: pitch angle, pitch motion data, roll angle and roll motion data.

In one embodiment, a motion sensor is configured to detect motion data of an off-road vehicle traversing a field or work site during a sampling interval. The motion data comprises ground speed or velocity of the off-road vehicle, or its implement. A first sensor (e.g., accelerometer 56 or IMU (53, 153)) is configured to: (a) detect pitch data of the off-road vehicle, or its implement, for the sampling interval to obtain a pitch acceleration, or (b) detect pitch angular acceleration data for the sampling interval. A second sensor (e.g., accelerometer 156 or IMU (53, 153)) is configured to: (a) detect roll data of the off-road vehicle, or its implement, for the sampling interval to obtain a roll acceleration, or (b) detect roll angular acceleration data of the off-road vehicle, or its implement, for the sampling interval. If the first sensor only detects pitch angle with respect to time, the electronic data processor 18 is configured to derive the pitch angle acceleration from a derivative of the detected pitch angle with respect to time. Similarly, if the second sensor only detects roll angle with respect to time, an electronic data processor 18 is configured to derive the roll angle acceleration from a derivative of the detected roll angle with respect to time.

In one embodiment, a rotational speed sensor 52 is configured to measure a drivetrain-derived wheel speed.

In FIG. 1A, the electronic data processor 18 or a path planning module 57 is configured to determine a path plan, such as prior path plan comprising one or more prior path segments and later path plan comprising one or more later path segments. The exclusion zone module 59 may be configured to estimate exclusion points or exclusion zones (e.g., cells) with reference to the path plan, planned paths or any constituent prior path segments, later path segments or both, as a vehicle (e.g., 82 in FIG. 2) prepares to traverse or traverses the field or work site over multiple sampling intervals.

An electronic data processor 18 or path planning module 57 is configured to generate a graphical display 25 that illustrates one or more estimated zones (e.g., exclusions zones 104 or exclusion points 110) of corresponding path plan within the field or work site. Further, an end user interface 22 is adapted to display 25 the graphical display 25 to a user or operator of the vehicle. In some configurations, the graphical display that illustrates proposed, candidate or existing path plans and exclusion zones (e.g., 104) for the vehicle 82 and/or implement 83, although graphical representations fall within the scope of the disclosure and appended claims.

A location-determining receiver (10, 210) can determine a position of a vehicle (82), or its implement (83), in the field or in the work site with respect to the estimated zones, such as headland regions of a field, a central region of a field, exclusion zones and exclusion points along a path plan or path segment.

In one embodiment, the exclusion zone module 59 can be operated in accordance with various techniques, which may be applied separately or cumulatively. Under a first technique, an exclusion zone module 59 is configured to estimate exclusion-zone settings (e.g., target exclusion-zone settings) for the implement 83 consistent with alignment and/or overlap of the determined position (e.g., in two or three dimensional coordinates) of the implement 83 (or vehicle 82) and the estimated exclusion zones 104 or exclusion points 110. Under a second technique, an exclusion zone module 59 configured to estimate exclusion-zone settings (e.g., target exclusion-zone settings) associated with the corresponding row units 66 of the implement 83 consistent with alignment and/or overlap of the determined position of the implement 83 and the estimated exclusion zones 104 or exclusion points 110, where different row units 66 can have different exclusion-zone settings if the different row units 66 of the implement fall within different estimated exclusion-zones of the corresponding exclusion zone ranges.

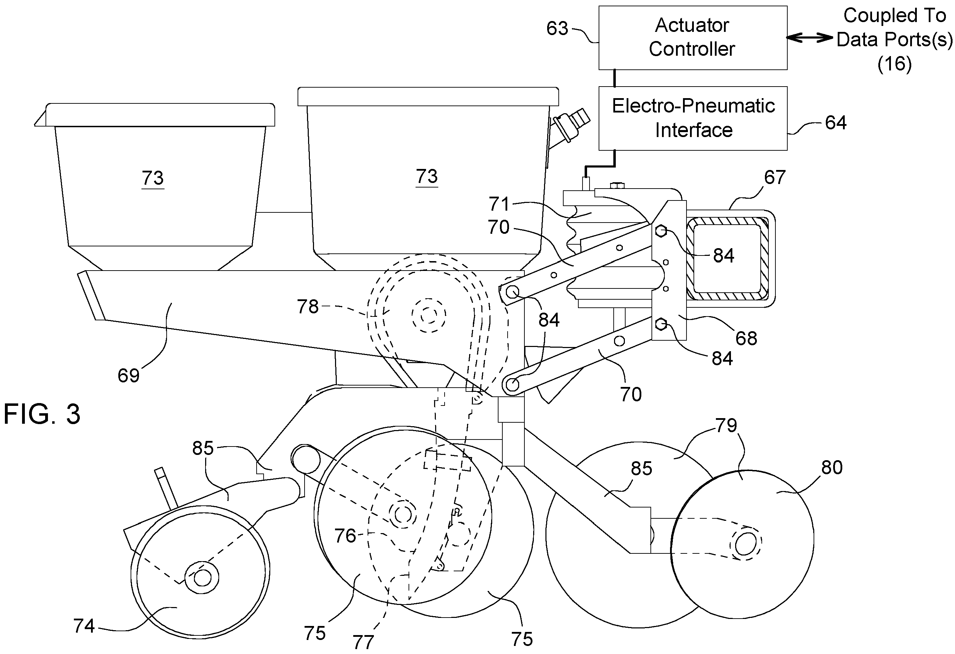

As illustrated in FIG. 1A in conjunction with FIG. 3 or FIG. 4, the implement control module 60 or actuator controller 63 can be operated in accordance with various procedures that may be applied separately or cumulatively. Under a first procedure, an implement control module 60, the actuator controller 63, or both are configured to control an actuator (71, 72) (e.g., via an interface (64, 65)) to adjust the estimated down-force setting for corresponding zones. Under a second procedure, an implement control module 60, actuator controller 63, or both are configured to control an actuator (71, 72) (e.g., via an interface 64, 65) to increase or increment the down-force setting for a primary corresponding zones of a field, or to decrease or decrement the down-force setting for a secondary corresponding zones of a field to transition between different down-force settings.

The system 111 of FIG. 1B is similar to the system 11 of FIG. 1A, except the system 111 further comprises an imaging system 61, a second location determining receiver 210, a wireless communications device 147. As illustrated the imaging system 61 is coupled to one or more data ports 16 of the data processing system 14. Like reference numbers in FIG. 1A and FIG. 1B indicate like features or elements.

In one embodiment, the imaging system 61 is configured to collect image data of the field or work site in a forward field of view of the vehicle in one or more electromagnetic frequency bands or wavelengths, such as humanly visible light, infra-red radiation, ultra-violet radiation, or the like. For example, the imaging system 61 may comprise a stereo imaging system or stereo camera for collecting stereoscopic images or three-dimensional image clouds or three-dimensional image constellations of ground regions within the field of view (e.g., forward facing region or zone in front of the vehicle 82). In some configurations, the imaging system 61 or electronic data processor 18 can align (e.g., or stitch together) successive local images to assemble an aggregate view of an entire field or work area that is traversed or surveyed by the off-road vehicle equipped with the imaging system 61. For example, the imaging system 61 or electronic data processor 18 may assign or identify two or three dimensional reference points in successive local images to spatially align successive images to assemble an aggregate view of an entire field or work area.

The second location-determining receiver 210 is the same or similar to the location-determining receiver 10, which may be referred to as the first location determining receiver. However, the first location-determining receiver 10 may be mounted on or in the vehicle 82, or its implement 83. If both a first location-determining receiver 10 and second location-determining receiver 210 are present, the second location-determining receiver 210 is typically mounted on or in the implement 83 and the first location-determining receiver 10 is mounted on or in the vehicle 82. The wireless communications device 147 is the same or similar to the wireless communications device 47. For example, the wireless communications device 147 is coupled to the second location-determining receiver 210 to provide correction data to it.

In accordance with one embodiment, a method and system facilitates precise planting based on planned paths, consistent with exclusion points 110 or exclusion zones 104 along paths where seeds are not planted for one or more row units 66 to reduce potential damage to previously planted seeds or seedlings near or within the exclusion points 110 or exclusion zones 104. The system comprises an electronic data processor 18 is coupled to data storage device 24 for storing one or more modules or software instructions that are executable by the data processor 18. In one embodiment, the system comprises a path planning module 57 or electronic data processor 18 configured to establish a path plan for a planter to cover a first area of the field at least once with a sequence of path segments in which some of the path segments are generally parallel to each other and spaced apart. A path interference estimator 58 or the electronic data processor 18 is configured to estimate potential interference between two or more path segments with respect to a first path segment (e.g., earlier or prior path segment) and a second path segment (e.g., present or later path segment), wherein the first path segment is associated with an earlier scheduled portion of the sequence and the second path segment is associated with a later scheduled portion of a sequence of path segments within a planned path or path plan. An exclusion zone module 59 or the electronic data processor 18 is configured to determine an exclusion zone 104 for one or more row units 66 of the implement (e.g., planter) to prohibit planting of one or more rows of seeds or seedlings within the exclusion zone 104 based on the estimated potential interference. Responsive to user input via the user interface 22, the electronic data processor 18 is configured to activate or execute the path plan and determined exclusion zone 104 in accordance with the established path plan and determined exclusion zone 104.

FIG. 2 is a perspective view of an off-road vehicle 82 (e.g., tractor) that is towing a planting implement 83 of multiple row units 66 with adjustable down-force in accordance with a data map (301, 321) of down-force zones (e.g., cells or adjoining hexagonal cells that comprise a field). Row units 66 are associated with the implement 83 that is coupled to the off-road vehicle 82. Moreover, electronic data processor 18 or implement control module 60 of the data processing system 14 may selectively activate seeding or planting of one or more row units 66, independently from other row units (e.g., as the implement traverses a path plan or path segment of a path plan). For example, if the implement 83 or planter comprises a first row unit 66 through an Nth row unit, where N equals any positive integer greater than two, one or more of the row units 66, among the first row unit to the Nth row unit, inclusive, may be activated for a corresponding geographic zone, cell or row segment, path segment or portion of the field, and/or during a certain activation time interval, which may be proportional to the velocity and speed of the implement 83 or planter, or a particular row unit 66. (e.g., stop, pause or suspend seeding or planting for time period).

FIG. 3 is a side view of one embodiment of a row unit 66, with adjustable down-force and adjustable seeding rate to pause, disable, stop, or interrupt seeding for a no-planting time period within an exclusion zone 104 or at one or more successive exclusion points 110, of the planting implement of FIG. 3.

Each row unit 66 is mounted on a traverse member 67 of an implement 83 by a bracket 68 that is spaced apart from a horizontal frame member 69. One or more arms 70 are pivotably connected to the bracket 68 and to the horizontal frame member 69 at pivot points 84 to allow the vertical height of the horizontal frame member 69 to vary (e.g., with respect to the ground) from the vertical height of the transverse member 67; hence, to allow for some adjustment in the down-force applied to any of the following: the closer 74, the planting disk 75, and the opener 79.

As illustrated in FIG. 3 a pneumatic cylinder 71 is secured to the bracket 68 at one end (or an upper bracket portion) and secured (e.g., pivotably attached) to one of the arms 70 on the opposite end to adjust the down-force applied to any of the following: the closer 74, the planting disk 75, and the opener 79; or alternately, or cumulatively, to allow for the adjustment of the depth of the planted seed or the seed tube 76.

In FIG. 3, a block diagram is associated with the pneumatic cylinder 71, where the block diagram comprises an actuator controller 63 that is coupled to an electro-pneumatic interface 64. The actuator controller 63 can be coupled to the data ports 16 of the data processing system 14 of FIG. 1A or FIG. 1B, for example. Meanwhile, the electro-pneumatic interface 64 may be associated with pneumatic system or pump to control the pressure or flow of air or nitrogen in the pneumatic cylinder 71 to control the planting depth or down-force of the row unit 66, or in tandem with one or more other row units 66 of the implement 83.

In one embodiment, a seed container 73 or seed hopper is supported by or above the horizontal frame member 69. The seed container 73 feeds seeds into a seed metering device 78 that is generally below the seed container 73. In some configurations, the seed metering device 78 meters or controls the spacing of the seeds (planted in a row, furrow, depression or trench in the soil) based on or proportional to the ground speed of the implement 83 (e.g., planter).

In the front of the planter, there is an opener 79 or opening wheel 80 that opens a furrow or trench in the soil. Behind the opener 79, there is planting disk 75 that is associated with an end of a seed tube 76 or seed exit 77 in which seeds are dispensed into the opened furrow or trench in the soil. Behind the planting disk 75 and the seed exit 77, a closer 74 closes the trench or furrow or covers the planted seed with soil. As illustrated, the support 85 supports the opener 80, planting disk 75, and the closer 74.

FIG. 4 is a side view of another embodiment of a row unit 166, with adjustable down-force, of the planting implement of FIG. 2. Like reference numbers in any two drawings, such as FIG. 1A, FIG. 1B, FIG. 2, FIG. 3 and FIG. 4 indicate like elements. For example, the row unit 166 of FIG. 4 is similar the row unit 66 of FIG. 3, except the row unit 166 replaces the pneumatic cylinder 71 with a hydraulic cylinder 72, or an electric actuator (e.g., linear motor or rotary electric motor with a screw assembly).

As illustrated in FIG. 4, the hydraulic cylinder 72 is secured to the bracket 68 at one end (or to an upper bracket portion) and secured to one of the arms 70 on the opposite end to allow for some adjustment in the down-force applied to any of the following: the closer 74, the planting disk 75, and the opener 79; alternately or cumulatively, the allow for adjustment of the depth of the planted seed or the seed exit 77 of the seed tube 76.

In FIG. 4, a block diagram is associated with the hydraulic cylinder 72, where the block diagram comprises an actuator controller 63 that is coupled to an electro-hydraulic interface 65. The actuator controller 63 can be coupled to the data ports 16 of the data processing system 14 of FIG. 1A or FIG. 1B, for example. Meanwhile, the electro-hydraulic interface 65 may be associated with hydraulic system or pump to control the pressure or flow of hydraulic fluid in the hydraulic cylinder 72 to control the planting depth or down-force of the row unit 66, or in tandem with one or more other row units 66 of the implement 83. In an alternate embodiment, the electrohydraulic interface 65 is optional and is not required if the hydraulic cylinder 72 is replaced with an electric actuator.

Under one technique, the exclusion zone 104 comprises a travel segment configured to the width of the vehicle 82 or the implement 83. The travel segment may comprise a path segment or set of path segments that are joined together end to end to form a continuous or circuitous path for the vehicle 82 or implement 83, where each path segment may be substantially straight, curved (e.g., Bezier curve), arced, or otherwise configured in into a path or set of path segments that the vehicle or implement is capable of tracking, given width, dimensions, turning radius and other components.

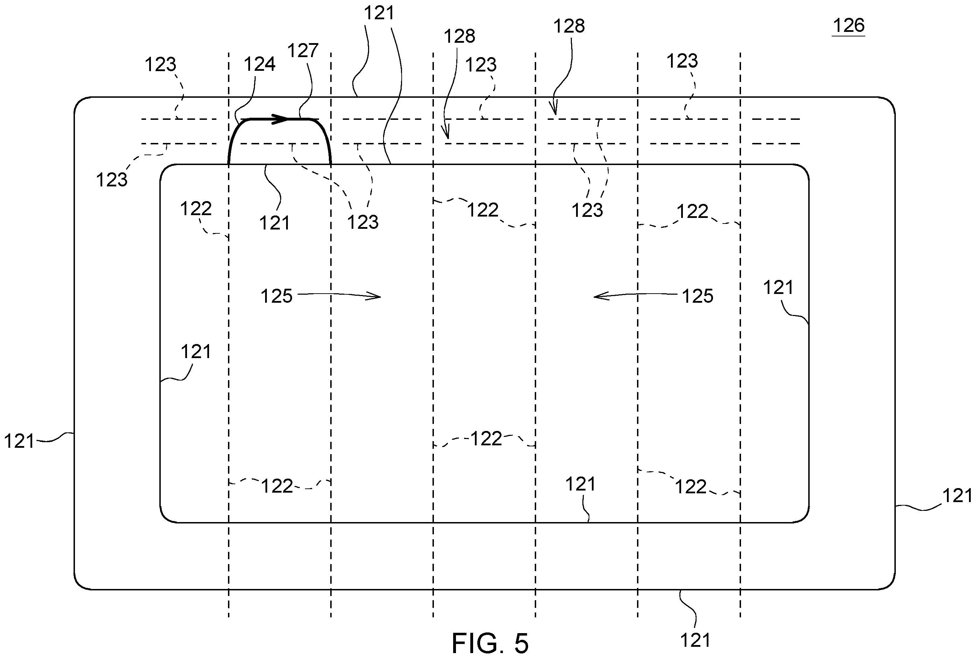

FIG. 5 illustrates a possible path plan 126 of a gap 83 in planted seeds or seedlings in a headland region 121 where, in a basic or simple configuration, all row units 66 of an implement 83 simultaneously stop, pause or suspend planting of seeds for a time period. In FIG. 5, there tends to be overlap of central path segments 122 (e.g., generally linear path segments) that exit a central region 125 of the field with headland path segments 123 (e.g., an outer lap, outer pass, or segment that is generally linear in FIG. 5) within a headland region 121 or headland zone. As used throughout this document, the vehicle 82 and/or implement 83 may track or traverse path segments, passes, rows or sequences of path segments, passes or rows. For example, path segments and passes may be regarded as synonymous terms; similarly, path segments and rows may be regarded as synonymous terms. Rows may also refer to rows of seeds, seedlings or plants that have been planted or seeded during a prior path segment or previously by one or more row units 66 of the implement 83. As illustrated in FIG. 5, the headland region 121 is a zone of the field that is bounded or defined by an inner boundary (e.g., inner substantially rectangular border with rounded corners) and an outer boundary (e.g., outer substantially rectangular border with rounded corners). The central region 125 of the field is the region within the inner boundary of the headland region 121.

In one illustrative example the vehicle 82 and/or the implement 83 traverses the dashed lines (122, 123) that are generally perpendicular to each other and also a curved path segment 124 of an end turn of FIG. 5. In the headland region 121, to the extent that the implement 83 crosses or traverses in the direction of travel along generally linear headland path segments 123, for a planting-suspension time period the implement 83 (e.g., planter automatically or responsive to operator (manual) commands) may stop planting seeds or seedlings for all row units 66 of an implement 83 in a simple configuration during a common time period (e.g. or for one or more row units 66 in a complex configuration for various discrete time periods). Here, in FIG. 5, the implement 83 (e.g., planter) makes a generally linear headland pass or traverses a substantially linear headland path segment 123 with gaps 128 illustrated in the headland path segments 123. No seeds or seedlings are planted within the gaps 128 or within one or more rows or row units 66 of the implement 83.

After the implement 83 traverses in a direction of travel along the path segments 122, the implement 83 completes a curved path segment 124 or end turn (e.g., end of row turn) in the headland region 121. At least a portion of the end turn or curved path segment 124 of the implement 83 may be aligned with the gap 128 in the previous or upcoming headland path segments 123 to avoid or minimize potential damage to seeds, seedlings or plants in the headland region 121. However, the curved path segment 124 tends to extend outside the gap 128 before it can be aligned with (e.g., turned at approximately a right angle to align with) the headland path segment (123 or 127); hence, in the headland region 121 damage to previously planted seeds or seedlings may occur because of some inherent misalignment of the gap 128 with the vehicle and/or implement path, and its curved path segment 124.

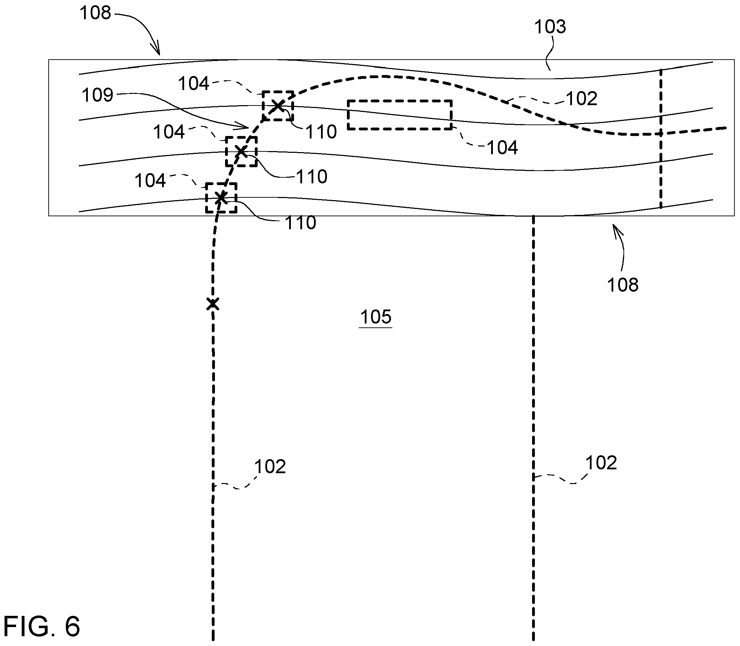

FIG. 6 illustrates a possible subsequent or later path plan 102 that an off-road vehicle and/or a towed implement may follow or track in a field or work area. The later path plan 102 or its later path segments are indicated with bold dashed lines in FIG. 6. As used throughout this document, any path segment is a straight section, curved section, or contour section of a path plan of the vehicle, and/or a towed implement, where the section or segment is bounded by two points on the path plan and where the two points on the path plan may be defined with reference to, or translated to, real world coordinates of the vehicle, and/or its implement along a center-line of the vehicle and/or implement in the direction of travel. Meanwhile, a previous or prior path plan 108 or its prior path segments are indicated by parallel contour segments. A complete path plan may comprise the prior path segments of a prior path plan 108 and the later path segments of a later path plan 102, or a sequence of the prior path segments of a prior path plan 108 and the later path segments of a later path plan 102.

In FIG. 6, one or more prior path segments and later path segments of the complete path plan (102, 108) overlap with each other during turning or a curved path segment 109 of an off-road vehicle and/or towed planting implement in accordance with the disclosure. For example, the prior headland path segment (of prior path plan 108) of the implement can interfere with or overlap with a present or later curved path segment 109 or end-turn segment of the implement (e.g., after the implement exits a central portion 105 of the field and enters the headland region 103).

In one example, as the curvature of curved path segment 109 of an end turn (e.g., later or subsequent pass or segment of a sequence of the path plan) exceeds the curvature of the prior path segments of prior path plan 108 (e.g., prior headland pass or prior segment of a sequence of the path plan) the interference or overlap defines exclusion points 110, which can be bounded by exclusion zones 104 or aggregated to define exclusion zones (e.g., to account for any uncertainty in the estimated position, heading, velocity, acceleration and/or attitude (pitch, roll or yaw angle) of the vehicle or implement). Here, in FIG. 6, the exclusion points 110 are indicated by X's on or that intercept the present or later path plan 102. Similarly, the exclusion zones 104 are indicated as rectangles, although they could be defined as substantially hexagonal, circular, polygonal, elliptical or with other suitable geometric shapes.

In another example, the prior pass or prior segment of prior path plan 108 (e.g., in the headland region 103) is somewhat parallel to the later pass or later segment of the present or later path plan 102 for one or more row units of the implement, but does not have proper full row alignment between the prior path segment and the later path segment of the implement. For instance, there may be an intermediate or fractional row alignment between the prior path segment and the later path segment of the implement and its row units, which is consistent with closer spacing than a standard row separation or standard row spacing between potential seeds or seedlings of the prior path segment and later path segment for one or more row units. The closer spacing makes the seeds or seedlings in the plant rows susceptible to damage from tires, wheels or tracks of the vehicle 82 and/or implement 83, unless an exclusion zone 104 is used to compensate for the closer spacing. Accordingly, with an exclusion zone 104 or for a series of successive exclusion points 104 along a later path segment, one or row units 66 of the implement that are not adequately aligned to full proper target row spacings or prior seed or seedling rows from prior path segments, can be temporarily disabled or shut down, until adequate alignment of each row unit 66, on an individual and independent basis from other row units 66 (e.g., whose row unit paths establish plant rows when seeding is active), is later realized . For example, the exclusion zone module 59 or electronic data processor 18 may identify "don't-plant" zones along previously planned paths or path segments of a sequence of path segments, where the seeds or seedlings would otherwise overlap or intersect with the tires, wheels or tracks of the implement 83 and/or vehicle 82.

With the advent of path planning for agricultural operations, more information about the future planter path segments or implement 83 passes is known up-front before planting begins. This information includes one or more of the following: (1) path segments, rows, or passes where the vehicle 83 (e.g., tractor) and implement 83 (e.g., planter) will travel through the field; and (2) path segments, rows, or passes where the vehicle 82 (e.g., tractor) and implement 83 (e.g., planter) will turn for end turns in the headlands (e.g., which defines where the turns will take place). In FIG. 2, the row units 66 of the implement 83 (e.g., planter) are capable of row-by-row unit 66, on/off planting control on a dynamic. The system and method of the disclosure are well-suite to support efficient planting operations to save seed and reduce crop damage that can be predicted ahead of time (e.g., in virtual or simulated the path planning process or preplanning process before the vehicle enters the field or on a dynamic basis once the vehicle and implement are engaged in a planting operation). The turn and headland vehicle passes can be managed determine possible interactions between tire/wheels/tracks and plants to automatically avoid planting rows, or portions of rows, along a series of exclusion points 110 or in exclusion zones 104, where damage or overlapping planting is likely to happen.

In one configuration, the guidance module 26 and implement control module 60 operate collectively in accordance with a path plan provided by the path planning module 57 and exclusion zones provided by the exclusion zone module 59. Further, the implement control module 60 is configured to support planter section control, planter row unit control or row units 66, variable planted seed (population) density or seedling (population) density by row or rows of the implement 83 (e.g., planter), and precision seed-planting equipment to accurately avoid planting exclusion points or exclusion zones where vehicle, the implement, or its or their tracks or tires are likely to cause seeds, seedling or plant damage.

In some configurations, the path planning module 57 comprises an open field path planning system that determines the estimated passes that the vehicle 82 (e.g., tractor) and implement 83 (e.g., planter) will take to cover or traverse the entire field (in field passes as well as boundary or headland passes). Further, the path planning module 57 may determine parallel passes (e.g., to plant generally parallel rows of plants or crop in the field with defined row separation or spacing) and end turns near a boundary, edge or headland. The path interference estimator 58 or data processor estimates interference zones or overlapping passes of the vehicle and/or implement based on any of the following: (a) the planned path (e.g., coverage area that comprises parallel pass segments and end turn segments), (b) application of the planned path to specific equipment parameters, such as the parameters of vehicle 82 and implement 83 (e.g., planter), like planter width, row spacing of row units, turning radius of implement, turning radius of vehicle 82, hitch parameters of any hitch interconnecting the vehicle 82 and implement 83, and the like. The exclusion zone module 59 estimates exclusion points or exclusion zones based on predicted interference or overlap of vehicle and/or implement passes. The exclusion zone module 59 or data processor 18 marks no-plant zones, such as keep-out areas, coverage area boundaries, boundaries, flags or other techniques, to alert the vehicle and/or implement (e.g., planter) where it should turn planting of seeds or seedlings on/off to avoid later damage to seeds, seedlings or plants resulting therefrom. Optionally, projections to tire paths or tracks of the vehicle and/or implement could be made from the raw path plans to understand each of the ground contact points near or in the exclusion zones.

In one configuration, the exclusion zone module 59 is configured to map interaction points, exclusion points, or exclusion zones. The exclusion zones or exclusion points are uploaded to the guidance module 26 of the vehicle and/or implement and the implement control module 60 in addition to the navigation paths or planned paths of the path planning module 57 for the planting operation. During planting, the vehicle (e.g., tractor) and towed implement (e.g., planter) will follow the planned paths and areas of predicted interaction, such as exclusion points and exclusion zones, will not be planted with seeds or seedlings to avoid later damage to such seeds or seedlings that would otherwise likely occur.

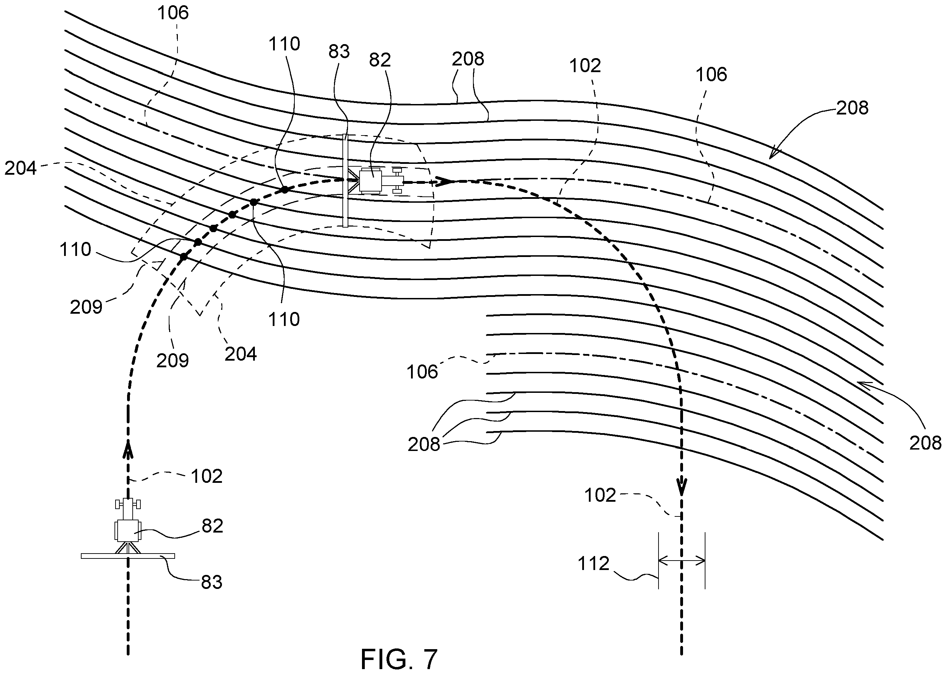

FIG. 7 illustrates a possible path plan that comprises an earlier or prior path plan 208 of prior path plan segments and a subsequent or later path plan 102 of present or later path segments, where the later path segments can overlap with the prior path segments of the vehicle 82, and/or implement 83. Further, FIG. 7 illustrates exclusion points 110 along the present or later path segments and various exclusion zones 104 that can be defined about the exclusion points 110. As illustrated in the example of FIG. 7, there is a core exclusion zone or central path exclusion zone 209 and the extended exclusion zone 204 (e.g., implement-width exclusion zone). As illustrated in FIG. 7, in accordance with a path plan or planned path outputted by the path planning module 57 to accomplish a planting mission or other agricultural task, the guidance module 26 defines a central guidance path 106, indicated by alternating long and short dashes, for the prior path plan 208 (e.g., that comprises contour path segments) and a central guidance path, indicated by bold dashes, for a present or later path plan 102 (e.g., that comprises a curved path segment, turn or end turn).

FIG. 7 provides at least three discrete levels of exclusion zones for the planting row units to avoid damaging prior seeds or seedlings in rows and to avoid overplanting or double planting of interference regions. Under a first level (e.g., minimum level) of exclusion zones, as the vehicle 82 and/or implement 83, via the guidance module 26 in accordance with the path plan or planned path, tracks the later path plan 102, the exclusion zone module 59, implement control module 60, or electronic data processor 18 is configured to deactivate (e.g., stop, pause or suspend seeding or planting for time period to suspend dispensing seeds into furrows of soil) the row unit or row units 66 at one or more exclusion points 110 (e.g., series of exclusion points) that intercept or cross the prior path segments of the prior path plan 208 in a sequence of path segments.

Under a second level (e.g., intermediate level) of exclusion zones, as the vehicle 82 and/or implement 83, via the guidance module 26 in accordance with the path plan or planned path, tracks the later path plan 102, the exclusion zone module 59, implement control module 60, or electronic data processor 18 is configured to deactivate (e.g., stop, pause or suspend seeding or planting for time period) the row unit or row units 66 for central path exclusion zone 209 (e.g., series of exclusion points) that intercept or cross the portions of prior path segments of the prior path plan 208 in a sequence of path segments. For example, the exclusion zone module 59, implement control module 60, or electronic data processor 18 is adapted to set or define one or more edges of the central path exclusion zone 209 by deactivating inner row units 66 on both sides of the implement 83 with respect to the central guidance path (e.g., or later path plan 102).

Under a third level (e.g., maximum level) of exclusion zones, as the vehicle 82 and/or implement 83, via the guidance module 26 in accordance with the path plan or planned path, tracks the later path plan 102, the exclusion zone module 59, implement control module 60, or electronic data processor 18 is configured to deactivate (e.g., stop, pause or suspend seeding or planting for time period) the row unit or row units 66 for extended exclusion zone 204 (e.g., series of exclusion points) that intercept or cross the portions of prior path segments of the prior path plan 208 in a sequence of path segments. For example, the exclusion zone module 59, implement control module 60, or electronic data processor 18 is adapted to set or define one or more edges of the central path exclusion zone 209 (e.g., even up to the implement width 112 or swath width of the implement 83) by deactivating one or more row units 66 on both sides of the implement 83.

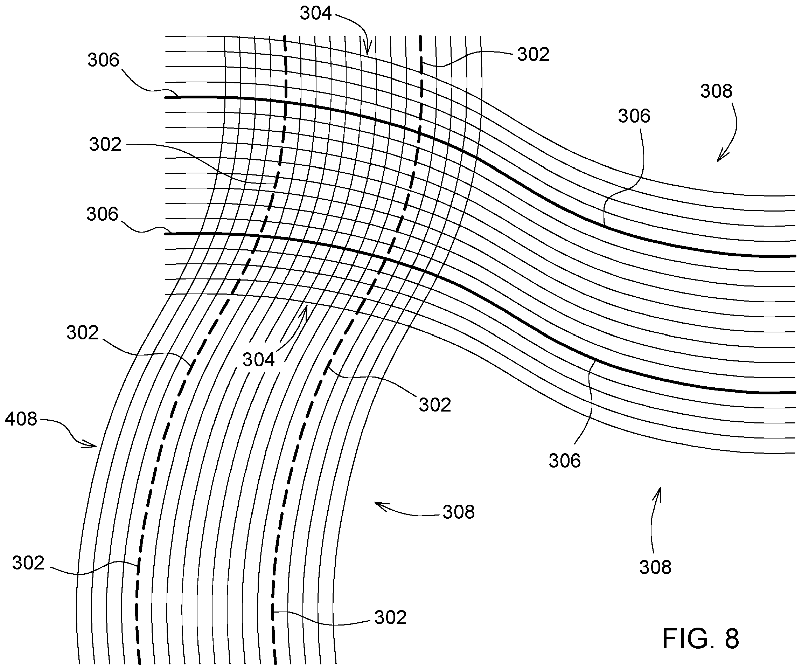

FIG. 8 illustrates another possible later path plan 302 of later path segments of the vehicle 82 and/or implement 83 that can overlap or interfere with a earlier or prior path plan 306. On one or both sides of the later path plan 302, indicated by bold dashed lines, there is a set of parallel rows that are tracked by the vehicle 82 and/or implement 83. Similarly, on one or both sides of the prior path plan 306, indicated by bold solid lines, there is set of parallel rows that are tracked by the vehicle and/or implement. The sets of parallel rows may define plant rows of seeds or seedlings, which are established by any number of active row units of the implement 83 via substantially linear path segments, curved path segments (e.g., as curved as contour lines), or both. Here, the temporal exclusion zone 304, may be defined for a prior path plan or one or more prior path segments by a polygonal, trapezoidal, or other region where the later path segments or prior path segments overlap, whereas the temporal exclusion zone 304 expires for the present or later path plan to allow one set of (unidirectional) plant parallel plant rows 408 (e.g., vertical contour rows) to be planted.

FIG. 8 may address potential intersection of seed, seedling or plant rows inside or outside of the headland region.

In an alternate embodiment of FIG. 8, while the prior path plan 306 (e.g., earlier pass) of a sequence of path segments is generally continuously planted by row units 66 with uniform rate or variable rate seed population per row, among rows 308, the later path plan 302 (e.g., later pass) of the sequence of path segment is suspended, paused or discontinuously planted by row units 66 with zero seed or seedling population rate (or with a minimal seed or seedling population rate) for one or more rows in the temporal exclusion zone(s) 304 to maintain an average plant population per field area, and to avoid damage by the vehicle and/or implement during the later path plan 302 (e.g., later pass) of the sequence of the path plan.

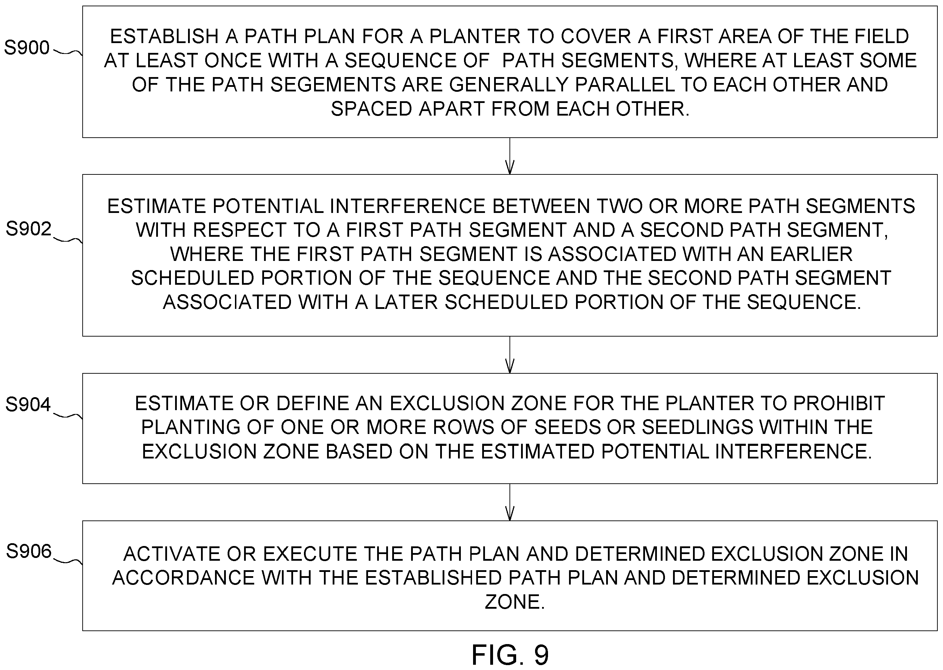

FIG. 9 is a flow chart of one embodiment of a method for precise planting based on planned paths. The method of FIG. 9 begins in step S900.

In step S900, the path planning module 57 or electronic data processor 18 is configured to establish a path plan for a planter to cover a first area of the field at least once with a sequence of path segments, where at least some of the path segments are generally parallel to each other and spaced apart from each other. Any path segment may comprise one or more of the following: a generally straight path segment, a curved path segment, an arced path segment, a straight section, curved section, an arced section, or contour section of a path plan of the vehicle 82, and/or a towed implement 83, where the section or segment is bounded by two points on the path plan and where the two points on the path plan may be defined with reference to, or translated to, real world coordinates of the vehicle, and/or its implement along a center-line of the vehicle and/or implement in the direction of travel. A previous or prior path plan (e.g., 108) or its prior path segments are indicated by parallel contour segments. A complete path plan may comprise the prior path segments of a prior path plan (e.g., 108, 208, 308) and the later path segments of a later path plan 102, or a sequence of the prior path segments of a prior path plan (e.g., 108, 208, 308) and the later path segments of a later path plan (e.g., 102).

In step S902, the path interference estimator 58 or electronic data processor 18 is configured to estimate potential interference between two or more path segments with respect to a first path segment and a second path segment, the first path segment (e.g., prior path segment) associated with an earlier scheduled portion of the sequence and the second path segment (e.g., later path segment) associated with a later scheduled portion of the sequence.

Step S902 is carried out in accordance with various techniques, which may be applied separately or cumulatively. Under a first technique, the potential interference is indicative of intersection or overlap of at least one previously scheduled row of planted seeds or seedlings for the first path segment (e.g., prior path segment) with the second path segment of the vehicle that is configured to propel the planter through the field. Under a second technique, the potential interference is indicative intersection or overlap of a set of previously scheduled rows of planted seeds or seedlings for the first path segment (e.g., prior path segment) with the second path segment (e.g., later path segment) of the vehicle that is configured to propel the planter through the field. Under a third technique, the potential interference is indicative of an intersection or overlap of a set of scheduled row of planted seeds or seedlings for the first path segment (e.g., prior path segment) with the second path segment (e.g., present or later path segment) of the implement or planter that is configured to propel the planter through the field.

In step S904, the exclusion zone module 59 or electronic data processor 18 is configured to estimate or to define an exclusion zone for the planter to prohibit planting of one or more rows of seeds or seedlings within the exclusion zone based on the estimated potential interference. For example, the user interface or display supports an operator's inputting, obtaining or accepting the established path plan and determined exclusion zone.

Step S904 may be executed in accordance with various examples, which may be applied separately or cumulatively. Under a first example, the previously scheduled rows are generally parallel to each other and wherein the exclusion zone has a generally rectangular boundary. Under a second example, the previously scheduled rows define contour segments that are parallel to each other and wherein the exclusion zone has a generally curved boundary that tracks the defined contour segments or path segments. Under a third example, an exclusion zone is within a headland of a field and comprises a unplanted travel path that is used and reused to traverse the established path plan to minimize damage from wheels, tracks or tires of the vehicle and the implement to previously planted seeds or plants. Under a fourth example, the exclusion zone comprises an unplanted travel path that is used and reused to traverse the established path plan to minimize damage from wheels, tracks or tires of the vehicle and the implement to previously planted seeds or plants during a subsequent agricultural operation, such as spraying, fertilizing, irrigating or applying other crop inputs. Under a fifth example, the exclusion zone comprises a segment of subsequent path plan for the vehicle or implement to travel or align the implement to a target location and pose on the field or an uncovered, remaining or untreated region of the field.

In step S906, the guidance module 26, implement control module 60 and/or electronic data processor 18 is configured to activating or executing the path plan and determined exclusion zone in accordance with the established path plan and determined exclusion zone. A (complete) path plan can comprise a sequence of prior path segments (of a prior path plan) and later path segments (of a later path plan), for example.

The method and system of the disclosure is well-suited for avoiding soil compaction or concentrating the soil compaction into an unplanted exclusion zone (e.g., travel segment configured to the width of the vehicle or the implement) for travel of the vehicle amidst and adjacent to adjoining crop. The method and system described in this document can potentially reduce damage to planted seed or seedlings in the field by directing the vehicle tires, wheels, or tracks through the unplanted exclusion zone. Further, the method and system can facilitate use of less seeds or seedlings planted throughout the field.

The scope of the present invention is defined by the following claims.

## Claims

1. A system (14) for precise planting based on planned paths, the system comprising an electronic data processor (18) coupled to a data storage device (24) for storing one or more modules or software instructions that are executable by the data processor (18), the system comprising:
a path planning module (57) or electronic data processor (18) configured to establish a path plan for a planter to cover a first area of the field at least once with a sequence of path segments that are generally parallel to each other and spaced apart;
a path interference estimator (58) or the electronic data processor (18) configured to estimate potential interference between two or more path segments with respect to a first path segment and a second path segment, the first path segment associated with an earlier scheduled portion of the sequence and the second path segment associated with a later scheduled portion of the sequence;
**characterized in that** the system (14) further comprises:
an exclusion zone module (59) or the electronic data processor (18) configured to determine an exclusion zone for the planter to prohibit planting of one or more rows of seeds or seedlings within the exclusion zone based on the estimated potential interference; and
responsive to user input via a user interface (22), the electronic data processor (18) is configured to activate or execute the path plan and determined exclusion zone in accordance with the established path plan and determined exclusion zone;
wherein the exclusion zone comprises an unplanted travel path that is used and reused to traverse the established path plan to minimize damage from wheels, tracks or tires of the vehicle that is configured to propel the planter through the field and an implement to previously planted seeds or plants during a subsequent agricultural operation, such as spraying, fertilizing, irrigating or applying other crop inputs.

2. The system (14) according to claim 1 further comprising:
the user interface (22) configured to support inputting, obtaining or accepting the established path plan and determined exclusion zone.

3. The system (14) according to claim 1 or 2 further comprising:
a first wireless communications device (47) coupled to a data port (16) for receiving wireless communication data or data messages related to the established path plan and determined exclusion zone from a second wireless communication device associated with a server, computer, computer network, or cloud service.

4. The system (14) according to any of claims 1 to 3 wherein the potential interference is indicative of an intersection or overlap of at least one previously scheduled row of planted seeds or seedlings for the first path segment with the second path segment of the vehicle that is configured to propel the planter through the field.

5. The system (14) according to any of claims 1 to 3 wherein the potential interference is indicative of an intersection or overlap of a set of previously scheduled rows of planted seeds or seedlings for the first path segment with the second path segment of the vehicle that is configured to propel the planter through the field.

6. The system (14) according to claim 5 wherein the previously scheduled rows are generally parallel to each other and wherein the exclusion zone has a generally rectangular boundary.

7. The system (14) according to claim 5 wherein the previously scheduled rows define contour segments that are parallel to each other and wherein the exclusion zone has a generally curved boundary that tracks the defined contour segments.

8. The system (14) according to any of claims 1 to 3 wherein the potential interference is indicative of an intersection or overlap of a set of scheduled row of planted seeds or seedlings for the first path segment with the second path segment of a planting implement or the planter that is configured to propel the planter through the field.

9. The system (14) according to any of claims 1 to 8 wherein the exclusion zone is within a headland of a field.

10. A method for precise planting based on planned paths, the method comprising:
establishing (S900) a path plan for a planter to cover a first area of the field at least once with a sequence of path segments that are generally parallel to each other and spaced apart;
estimating (S902) potential interference between two or more path segments with respect to a first path segment and a second path segment, the first path segment associated with an earlier scheduled portion of the sequence and the second path segment associated with a later scheduled portion of the sequence;
**characterized in that** the method further comprises:
determining (S904) an exclusion zone for the planter to prohibit planting of one or more rows of seeds or seedlings within the exclusion zone based on the estimated potential interference; and
activating or executing (S906) the path plan and determined exclusion zone in accordance with the established path plan and determined exclusion zone;
wherein the exclusion zone comprises an unplanted travel path that is used and reused to traverse the established path plan to minimize damage from wheels, tracks or tires of the vehicle that is configured to propel the planter through the field and an implement to previously planted seeds or plants during a subsequent agricultural operation, such as spraying, fertilizing, irrigating or applying other crop inputs.

11. The method according to claim 10 wherein the potential interference is indicative of intersection or overlap of at least one previously scheduled row of planted seeds or seedlings for the first path segment with the second path segment of the vehicle that is configured to propel the planter through the field.

12. The method according to claim 10 wherein the potential interference is indicative of intersection or overlap of a set of previously scheduled rows of planted seeds or seedlings for the first path segment with the second path segment of the vehicle that is configured to propel the planter through the field.

13. The method according to claim 10 wherein the potential interference is indicative of an intersection or overlap of a set of scheduled row of planted seeds or seedlings for the first path segment with the second path segment of a planting implement or the planter that is configured to propel the planter through the field.

## Patentansprüche

1. System (14) zum präzisen Pflanzen auf Basis von geplanten Fahrwegen, wobei das System einen elektronischen Datenprozessor (18) umfasst, der mit einer Datenspeichervorrichtung (24) zum Speichern von einem/einer oder mehr Modulen oder Softwareanweisungen, die durch den Datenprozessor (18) ausführbar sind, gekoppelt ist, wobei das System umfasst:
ein Fahrwegplanungsmodul (57) oder einen elektronischen Datenprozessor (18), das/der zum Aufstellen eines Fahrwegplans für eine Pflanz-/Sämaschine konfiguriert ist, um eine erste Fläche des Felds mindestens einmal mit einer Folge von Wegsegmenten abzudecken, die allgemein parallel zueinander und voneinander beabstandet sind;
einen Wegüberlagerungsschätzer (58) oder den elektronischen Datenprozessor (18), der zum Schätzen potenzieller Überlagerungen zwischen zwei oder mehr Wegsegmenten in Bezug auf ein erstes Wegsegment und ein zweites Wegsegment konfiguriert ist, wobei das erste Wegsegment einem früher eingeplanten Teil der Folge zugeordnet ist und das zweite Wegsegment einem später eingeplanten Teil der Folge zugeordnet ist;
**dadurch gekennzeichnet, dass** das System (14) ferner umfasst:
ein Sperrzonenmodul (59) oder den elektronischen Datenprozessor (18), das/der zum Bestimmen einer Sperrzone für die Pflanz-/Sämaschine konfiguriert ist, um das Aussäen bzw. Setzen von ein oder mehr Reihen von Saatgut oder Setzlingen in der Sperrzone auf Basis der geschätzten potenziellen Überlagerung zu verhindern; und
der elektronische Datenprozessor (18), auf Benutzereingaben über eine Benutzeroberfläche (22) reagierend, zum Aktivieren oder Ausführen des Fahrwegplans und der bestimmten Sperrzone gemäß dem aufgestellten Fahrwegplan und der bestimmten Sperrzone konfiguriert ist;
wobei die Sperrzone einen unbepflanzten bzw. unbesäten Fahrweg umfasst, der zum Befahren des aufgestellten Fahrwegplans verwendet und wiederverwendet wird, um Schäden durch Räder, Ketten oder Reifen des Fahrzeugs, das zum Voranbewegen der Pflanz-/Sämaschine über das Feld konfiguriert ist, und eines Geräts an zuvor gesätem Saatgut oder gepflanzten Pflanzen während eines nachfolgenden landwirtschaftlichen Vorgangs, wie etwa Sprühen, Bewässern oder Anwenden anderer Einträge für Nutzpflanzen, zu minimieren.

2. System (14) nach Anspruch 1, das ferner umfasst:
die Benutzeroberfläche (22), die zum Unterstützen von Eingeben, Erhalten oder Annehmen des aufgestellten Fahrwegplans und der bestimmten Sperrzone konfiguriert ist.

3. System (14) nach Anspruch 1 oder 2, das ferner umfasst:
eine erste Drahtloskommunikationsvorrichtung (47), die zum Empfangen von Drahtloskommunikationsdaten oder Datennachrichten in Bezug auf den aufgestellten Fahrwegplan und die bestimmte Sperrzone von einer zweiten Drahtloskommunikationsvorrichtung, die einem Server, Computer, Computernetz oder Cloud-Dienst zugeordnet ist, mit einem Datenport (16) gekoppelt ist.

4. System (14) nach einem der Ansprüche 1 bis 3, wobei die potenzielle Überlagerung für eine Überschneidung oder Überlappung von mindestens einer früher eingeplanten Reihe von gesätem Saatgut oder gepflanzten Setzlingen für das erste Wegsegment durch das zweite Wegsegment des Fahrzeugs, das zum Voranbewegen der Pflanz-/Sämaschine über das Feld konfiguriert ist, bezeichnend ist.

5. System (14) nach einem der Ansprüche 1 bis 3, wobei die potenzielle Überlagerung für eine Überschneidung oder Überlappung von einem Satz früher eingeplanter Reihen von gesätem Saatgut oder gepflanzten Setzlingen für das erste Wegsegment durch das zweite Wegsegment des Fahrzeugs, das zum Voranbewegen der Pflanz-/Sämaschine über das Feld konfiguriert ist, bezeichnend ist.

6. System (14) nach Anspruch 5, wobei die zuvor eingeplanten Reihen allgemein parallel zueinander sind und wobei die Sperrzone eine allgemein rechteckige Eingrenzung aufweist.

7. System (14) nach Anspruch 5, wobei die zuvor eingeplanten Reihen Kontursegmente definieren, die parallel zueinander sind, und wobei die Sperrzone eine allgemein gekrümmte Eingrenzung aufweist, die den definierten Kontursegmenten folgt.

8. System (14) nach einem der Ansprüche 1 bis 3, wobei die potenzielle Überlagerung für eine Überschneidung oder Überlappung eines Satzes eingeplanter Reihen von gesätem Saatgut oder gepflanzten Setzlingen für das erste Wegsegment durch das zweite Wegsegment eines Pflanz-/Sägeräts oder der Pflanz-/Sämaschine, die zum Voranbewegen der Pflanz-/Sämaschine über das Feld konfiguriert ist, bezeichnend ist.

9. System (14) nach einem der Ansprüche 1 bis 8, wobei die Sperrzone in einem Vorgewende eines Felds liegt.

10. Verfahren zum präzisen Pflanzen auf Basis von geplanten Fahrwegen, wobei das Verfahren umfasst:
Aufstellen (S900) eines Fahrwegplans für eine Pflanz-/Sämaschine, um eine erste Fläche des Felds mindestens einmal mit einer Folge von Wegsegmenten abzudecken, die allgemein parallel zueinander und voneinander beabstandet sind;
Schätzen (S902) potenzieller Überlagerungen zwischen zwei oder mehr Wegsegmenten in Bezug auf ein erstes Wegsegment und ein zweites Wegsegment, wobei das erste Wegsegment einem früher eingeplanten Teil der Folge zugeordnet ist und das zweite Wegsegment einem später eingeplanten Teil der Folge zugeordnet ist;
**dadurch gekennzeichnet, dass** das Verfahren ferner umfasst:
Bestimmen (S904) einer Sperrzone für die Pflanz-/Sämaschine, um das Aussäen bzw. Setzen von ein oder mehr Reihen von Saatgut oder Setzlingen in der Sperrzone auf Basis der geschätzten potenziellen Überlagerung zu verhindern; und
Aktivieren oder Ausführen (S906) des Fahrwegplans und der bestimmten Sperrzone gemäß dem aufgestellten Fahrwegplan und der bestimmten Sperrzone;
wobei die Sperrzone einen unbepflanzten bzw. unbesäten Fahrweg umfasst, der zum Befahren des aufgestellten Fahrwegplans verwendet und wiederverwendet wird, um Schäden durch Räder, Ketten oder Reifen des Fahrzeugs, das zum Voranbewegen der Pflanz-/Sämaschine über das Feld konfiguriert ist, und eines Geräts an zuvor gesätem Saatgut oder gepflanzten Pflanzen während eines nachfolgenden landwirtschaftlichen Vorgangs, wie etwa Sprühen, Bewässern oder Anwenden anderer Einträge für Nutzpflanzen, zu minimieren.

11. Verfahren nach Anspruch 10, wobei die potenzielle Überlagerung für eine Überschneidung oder Überlappung von mindestens einer früher eingeplanten Reihe von gesätem Saatgut oder gepflanzten Setzlingen für das erste Wegsegment mit dem zweiten Wegsegment des Fahrzeugs, das zum Voranbewegen der Pflanz-/Sämaschine über das Feld konfiguriert ist, bezeichnend ist.

12. Verfahren nach Anspruch 10, wobei die potenzielle Überlagerung für eine Überschneidung oder Überlappung von einem Satz früher eingeplanter Reihen von gesätem Saatgut oder gepflanzten Setzlingen für das erste Wegsegment durch das zweite Wegsegment des Fahrzeugs, das zum Voranbewegen der Pflanz-/Sämaschine über das Feld konfiguriert ist, bezeichnend ist.

13. Verfahren nach Anspruch 10, wobei die potenzielle Überlagerung für eine Überschneidung oder Überlappung eines Satzes eingeplanter Reihen von gesätem Saatgut oder gepflanzten Setzungen für das erste Wegsegment durch das zweite Wegsegment des Pflanz-/Sägeräts oder der Pflanz-/Sämaschine, die zum Voranbewegen der Pflanz-/Sämaschine über das Feld konfiguriert ist, bezeichnend ist.

## Revendications

1. Système (14) de plantation précise sur la base de chemins planifiés, le système comprenant un processeur de données électronique (18) couplé à un dispositif de stockage de données (24) pour stocker un ou plusieurs modules ou instructions logicielles qui sont exécutables par le processeur de données (18), le système comprenant :
un module de planification de chemins (57) ou processeur de données électronique (18) configuré pour établir un plan de chemins pour une planteuse afin de couvrir une première parcelle du champ au moins une fois avec une séquence de segments de chemin qui sont généralement parallèles les uns aux autres et espacés les uns des autres ;
un estimateur d'interférence de chemins (58) ou le processeur de données électronique (18) configuré pour estimer une interférence potentielle entre deux segments de chemin ou plus par rapport à un premier segment de chemin et à un deuxième segment de chemin, le premier segment de chemin étant associé à une partie de la séquence programmée plus tôt et le deuxième segment de chemin étant associé à une partie de la séquence programmée plus tard ;
**caractérisé en ce que** le système (14) comprend en outre :
un module de zone d'exclusion (59) ou le processeur de données électronique (18) est configuré pour déterminer une zone d'exclusion pour la planteuse afin d'interdire de planter une ou plusieurs rangées de graines ou semences dans la zone d'exclusion sur la base de l'interférence potentielle estimée ; et
en réponse à une entrée utilisateur via une interface utilisateur (22), le processeur de données électronique (18) est configuré pour activer ou exécuter le plan de chemins et la zone d'exclusion déterminée conformément au plan de chemins établi et à la zone d'exclusion déterminée ;
dans lequel la zone d'exclusion comprend un chemin de parcours non planté qui est utilisé et réutilisé pour traverser le plan de chemins établi afin de minimiser des dommages provenant des roues, chenilles ou pneus du véhicule qui est configuré pour propulser la planteuse à travers le champ et un outil, à des graines ou plantes plantées précédemment au cours d'une opération agricole subséquente, telle que pulvérisation, fertilisation, irrigation ou application d'autres intrants agricoles.

2. Système (14) selon la revendication 1, comprenant en outre :
l'interface utilisateur (22) configurée pour prendre en charge l'entrée, l'obtention ou l'acceptation du plan de chemins établi et de la zone d'exclusion déterminée.

3. Système (14) selon la revendication 1 ou 2, comprenant en outre :
un premier dispositif de communication sans fil (47) couplé à un port de données (16) pour recevoir des données de communication sans fil ou des messages de données concernant le plan de chemins établi et la zone d'exclusion déterminée d'un deuxième dispositif de communication sans fil associé à un serveur, ordinateur, réseau informatique ou service cloud.

4. Système (14) selon l'une quelconque des revendications 1 à 3, dans lequel l'interférence potentielle est indicative d'une intersection ou d'un chevauchement d'au moins une rangée programmée précédemment de graines ou semences plantées pour le premier segment de chemin avec le deuxième segment de chemin du véhicule qui est configuré pour propulser la planteuse à travers le champ.

5. Système (14) selon l'une quelconque des revendications 1 à 3, dans lequel l'interférence potentielle est indicative d'une intersection ou d'un chevauchement d'un ensemble de rangées programmées précédemment de graines ou semences plantées pour le premier segment de chemin avec le deuxième segment de chemin du véhicule qui est configuré pour propulser la planteuse à travers le champ.

6. Système (14) selon la revendication 5, dans lequel les rangées programmées précédemment sont généralement parallèles les unes aux autres et dans lequel la zone d'exclusion a généralement une limite rectangulaire.

7. Système (14) selon la revendication 5, dans lequel les rangées programmées précédemment définissent des segments de contour qui sont parallèles les uns aux autres et dans lequel la zone d'exclusion a une limite généralement courbée qui suit les segments de contour définis.

8. Système (14) selon l'une quelconque des revendications 1 à 3, dans lequel l'interférence potentielle est indicative d'une intersection ou d'un chevauchement d'un ensemble de rangée programmée de graines ou semences plantées pour le premier segment de chemin avec le deuxième segment de chemin d'un outil à planter ou de la planteuse qui est configuré pour propulser la planteuse à travers le champ.

9. Système (14) selon l'une quelconque des revendications 1 à 8, dans lequel la zone d'exclusion est dans une lisière d'un champ.

10. Procédé de plantation précise sur la base de chemins planifiés, le procédé comprenant :
établir (S900) un plan de chemins pour une planteuse afin de couvrir une première parcelle du champ au moins une fois avec une séquence de segments de chemin qui sont généralement parallèles les uns aux autres et espacés les uns des autres ;
estimer (S902) une interférence potentielle entre deux segments de chemin ou plus par rapport au premier segment de chemin et au deuxième segment de chemin, le premier segment de chemin étant associé à une partie de la séquence programmée plus tôt et le deuxième segment de chemin étant associé à une partie de la séquence programmée plus tard ;
**caractérisé en ce que** le procédé (14) comprend en outre :
déterminer (S904) une zone d'exclusion pour la planteuse afin d'interdire de planter une ou plusieurs rangées de graines ou semences dans la zone d'exclusion sur la base de l'interférence potentielle estimée ; et
activer ou exécuter (S906) le plan de chemins et la zone d'exclusion déterminée conformément au plan de chemins établi et à la zone d'exclusion déterminée ;
dans lequel la zone d'exclusion comprend un chemin de parcours non planté qui est utilisé et réutilisé pour traverser le plan de chemins établi afin de minimiser des dommages provenant des roues, chenilles ou pneus du véhicule qui est configuré pour propulser la planteuse à travers le champ et un outil, à des graines ou plantes plantées précédemment au cours d'une opération agricole subséquente, telle que pulvérisation, fertilisation, irrigation ou application d'autres intrants agricoles.

11. Procédé selon la revendication 10, dans lequel l'interférence potentielle est indicative d'une intersection ou d'un chevauchement d'au moins une rangée programmée précédemment de graines ou semences plantées pour le premier segment de chemin avec le deuxième segment de chemin du véhicule qui est configuré pour propulser la planteuse à travers le champ.

12. Procédé selon la revendication 10, dans lequel l'interférence potentielle est indicative d'une intersection ou d'un chevauchement d'un ensemble de rangées programmées précédemment de graines ou semences plantées pour le premier segment de chemin avec le deuxième segment de chemin du véhicule qui est configuré pour propulser la planteuse à travers le champ.

13. Procédé selon la revendication 10, dans lequel l'interférence potentielle est indicative d'une intersection ou d'un chevauchement d'un ensemble de rangées programmées de graines ou semences plantées pour le premier segment de chemin avec le deuxième segment de chemin d'un outil à planter ou de la planteuse qui est configuré pour propulser la planteuse à travers le champ.
